# EUROPÄISCHE PATENTSCHRIFT

(11) **EP 3 706 907 B1**
(45) Veröffentlichungstag und Bekanntmachung des Hinweises auf die Patenterteilung: **29.12.2021**
(21) Anmeldenummer: 18800904.7
(22) Anmeldetag: 08.11.2018
(51) Int. Cl.: G01N 35/10, B01L 3/02

(54) **PIPETTIERVORRICHTUNG MIT ELEKTROMAGNETISCH ANTREIBBAREM VERRIEGELUNGSAKTUATOR ZUR VERRIEGELUNG VON LÖSBAR ANGEKUPPELTEN PIPETTIERSPITZEN**
PIPETTE DEVICE WITH ELECTROMAGNETICALLY DRIVABLE LOCKING ACTUATOR FOR LOCKING RELEASABLY COUPLED PIPETTE TIPS
DISPOSITIF DE PIPETAGE AYANT UN ACTIONNEUR DE VERROUILLAGE À ENTRAINEMENT ÉLECTROMAGNÉTIQUE POUR VERROUILLER DES POINTES DE PIPETAGE À COUPLAGE AMOVIBLE

(30) Priorität: 10.11.2017 DE 102017220042
(43) Veröffentlichungstag der Anmeldung: 16.09.2020
(73) Patentinhaber: Hamilton Bonaduz AG, 7402 Bonaduz (CH)
(72) Erfinder: WALPEN, Silvio, 8800 Thalwil (CH); GYSEL, Fridolin, 8134 Adliswil (CH)
(74) Vertreter: Ruttensperger Lachnit Trossin Gomoll
(86) Internationale Anmeldenummer: PCT/EP2018/080581
(87) Internationale Veröffentlichungsnummer: WO 2019/092089

(56) Entgegenhaltungen:
- EP-A1- 1 862 219
- DE-A1-102013 218 002
- DE-A1-102015 213 005

## Beschreibung

Die vorliegende Anmeldung betrifft eine Pipettiervorrichtung gemäß dem Oberbegriff des Anspruchs 1.

Eine gattungsgemäße Pipettiervorrichtung ist aus der DE 10 2015 213 005 A1 bekannt. Diese Druckschrift offenbart eine Kopplungsausbildung mit einem Ausbeulungsabschnitt, welcher durch Aufschieben einer Pipettierspitze auf die Kopplungsausbildung bzw. durch eintauchen der Kopplungsausbildung in eine Pipettierspitze zwischen einer gestreckten Freigabestellung und einer ausgebeuteten Verriegelungsstellung verstellbar ist. Zur Ausbeulung des Ausbeulungsabschnitts wird das dem freien Längsende der Kopplungsausbildung näher gelegene erste Längsende des Ausbeulungsabschnitts dem längs der Kanalachse entgegengesetzten zweiten Längsende des Ausbeulungsabschnitts angenähert. Das erste Längsende liegt an einem ferromagnetischen, aber nicht notwendigerweise Dauer magnetisierten Ankerbauteil an, welches in der Verriegelungsstellung des Ausbeulungsabschnitts durch einen Haltemagneten in seiner Position festgelegt sein kann. Durch gezieltes Bestromen einer Spule kann dem Magnetfeld des Haltemagneten entgegengewirkt werden und dadurch das Ankerbauteil vom Haltemagneten gelöst werden, sodass sich der Ausbeulungsabschnitt zurück in seine gestreckte Freigabestellung bewegt. Der Ausbeulungsabschnitt ist gleichzeitig auch Dichtungsbauteil der bekannten Kopplungsausbildung.

Eine weitere Pipettiervorrichtung ist aus der EP 1 171 240 A bekannt. Das Verriegelungsbauteil dieser bekannten Pipettiervorrichtung ist ein elastomerer O-Dichtungsring, welcher durch den Verriegelungsaktuator während dessen Verstellung von der Freigabestellung in die Eingriffsstellung axial gequetscht und somit radial gedehnt wird. Ein bezüglich der Kanalachse radial außen liegender umlaufende ober Flächenabschnitt des O-Dichtungsring bildet die Eingriffsflächenanordnung dieses Verriegelungsbauteils. Durch die mit der axialen Quetschung bewirkte radiale Dehnung wird die Eingriffsflächenanordnung des bekannten Verriegelungsbauteils längs ihres gesamten Umfangs nach radial außen verlagert, wo sie in eine entsprechende Nut in einer zur Kanalachse weisenden Wandung einer Kopplungsformation einer Pipettierspitze körperlich eingreifen kann. Die Pipettierspitze wird dadurch formschlüssig an der Kopplungsausbildung der bekannten Pipettiervorrichtung gehalten.

Befindet sich der Verriegelungsaktuator dagegen in der Freigabestellung ist das bekannte Verriegelungsbauteil axial nicht gequetscht und somit auch nicht radial gedehnt, weshalb sich die Eingriffsflächenanordnung radial näher an der Kanalachse befindet, sodass die Pipettierspitze von der Kopplungsausbildung abgezogen oder abgestreift werden kann oder sogar von selbst abfällt.

Nachteilig an der letztgenannten bekannten Pipettiervorrichtung ist, dass der Verriegelungsaktuator für die gesamte Dauer der Ankopplung einer Pipettierspitze an die Kopplungsausbildung gegen die elastische Rückstellkraft des Verriegelungsbauteils in der Eingriffsstellung gehalten werden muss. Da bei der bekannten Pipettiervorrichtung das Verriegelungsbauteil nicht nur für eine körperlich-formschlüssige Ankopplung der Pipettierspitze an die Kopplungsausbildung der Pipettiervorrichtung sorgt, sondern überdies auch einen Pipettierraum der Pipettierspitze im Bereich der Kopplungsausbildung zur Außenumgebung hin abdichtet, muss der Verriegelungsaktuator mit so hoher Kraft gegen die elastische Rückstellkraft des Verriegelungsbauteils in der Eingriffsstellung gehalten werden, dass sowohl die mechanischkörperliche Ankopplung als auch die Abdichtung der Pipettierspitze während ihrer gesamten Ankopplungsdauer an die Kopplungsausbildung gewährleistet ist. Hierfür ist ein verhältnismäßig starker Aktuatorantrieb erforderlich, welcher aufgrund der von ihm über einen verhältnismäßig langen Zeitraum geforderten Antriebskraft einen unerwünscht großen Bauraum einnimmt.

Da Pipettiervorrichtungen in der Regel mehrere parallele Kanäle aufweisen, die in durch Mikrotiterplatten oder allgemein durch Mehrfach-Gefäße vorgegebene Rastermaße pipettieren können sollen, gefährdet der an jedem einzelnen Pipettierkanal notwendige Aktuatorantrieb aufgrund seiner Bauraumanforderung die Realisierung gewünschter Rastermaße, denn orthogonal zur Kanalachse nebeneinander angeordnete Pipettierkanäle können nur soweit aneinander angenähert werden, bis mit den jeweiligen benachbarten Pipettierkanälen gekoppelte Bauteile kollidieren.

Eine mögliche Umgehung des Problems nicht ausreichender Annäherbarkeit benachbarter Pipettierkanäle aufgrund von übermäßig großen Komponenten der Pipettiervorrichtung zeigt die EP 2 755 033 A2. Gemäß der dort vorgestellten Lösung sind benachbarte Pipettierkanäle alternierend an zwei mit Abstand voneinander angeordneten parallelen Führungsschienen beweglich geführt. Hierdurch ist der unmittelbar einem Pipettierkanal an derselben Führungsschiene nächstgelegene Pipettierkanal hinsichtlich der gesamten Pipettiervorrichtung der übernächste Nachbar, sodass für den einzelnen Pipettierkanal und die damit verbundenen Bauteile bei einem vorgegebenen Rastermaß mehr Raum als die eigentliche Rasterweite zwischen zwei funktionell benachbarten, also in unmittelbar benachbarte Gefäße pipettierende Pipettierkanäle, zur Verfügung steht. Die so entstehende Pipettiervorrichtung ist jedoch unerwünscht aufwendig, da sie einen doppelten Satz Führungsschienen und damit verbunden eine unerwünscht komplexe Montage sowie einen unerwünscht großen Bauraum benötigt.

Eine alternative Umgehung des genannten Problems zeigt die EP 2 410 342 A2, die zwar nur eine Führungsschiene für alle Pipettierkanäle der Pipettiervorrichtung erfordert, bei welcher jedoch längst der Führungsschiene unmittelbar benachbarte Pipettierkanal-Baugruppen - in der Fachwelt auch als "Pipettierköpfe" bezeichnet - alternierend um 180° verdreht an der Führungsschiene angeordnet sind. Auf diese Weise können Bauraum fordernde Bauteile einer Pipettierkanal-Baugruppe einem weniger Bauraum fordernden Abschnitt einer längs der Führungsschiene unmittelbar folgenden Pipettierkanal-Baugruppe benachbart sein, sodass einander benachbarte Pipettierkanäle einander stärker angenähert werden können, als wenn sich aufgrund einheitlicher Bauweise der Pipettierkanal-Baugruppen jeweils Bauraum fordernde Komponenten längs der Führungsschiene benachbart wären. Allerdings erfordert die aus der EP 2 410 342 A2 bekannte Lösung die Fertigung zweier unterschiedlicher Pipettierkanal-Baugruppen und eine entsprechende Sorgfalt bei der Montage.

Aus der EP 1 862 219 A1 ist eine Pipettiervorrichtung bekannt, deren Kopplungsausbildung axial voneinander mit Abstand angeordnete, gesondert ausgebildete Bauteile: Verriegelungsbauteil und Dichtungsbauteil umfasst. Das Dichtungsbauteil sorgt dabei für eine Abdichtung eines Pipettiervolumens einer lösbar angekoppelten Pipettierspitze. Allerdings ist das Verriegelungsbauteil dieser bekannten Pipettiervorrichtung rein passiv. Die bekannte Pipettiervorrichtung hat keinen Verriegelungsaktuator. Daher sind bei dieser Pipettiervorrichtung Kopplungskräfte zur lösbaren Ankopplung einer Pipettierspitze auf verhältnismäßig geringe, mit einer überwindbaren Verrastung erzielbare Kräfte beschränkt.

Aufgabe der vorliegenden Erfindung ist es daher, eine technische Lehre anzugeben, welche es gestattet, eine Pipettiervorrichtung der eingangs genannten Art derart weiterzubilden, dass sie die Einhaltung enger Rastermaße bei gleichzeitig einfachem Aufbau und einfacher Montage ermöglicht.

Diese Aufgabe wird gelöst durch eine Pipettiervorrichtung mit allen Merkmalen des Anspruchs 1.

Die vorliegende Erfindung löst die gestellte Aufgabe in zwei Stufen: durch die Trennung der Funktionen "Kopplungsverriegelung" einerseits und "Abdichtung" andererseits, kann der allein für die Kopplungsverriegelung notwendige Kraftaufwand verglichen mit der Lösung der EP 1 171 240 A verringert werden. Dadurch reicht ein bewegliches ferromagnetisches Reaktionsbauteil im Zusammenspiel mit einer schaltbaren Magnetfeldquelle aus, um das Reaktionsbauteil zu bewegen und gemeinsam mit diesem den Bewegung übertragend mit dem Reaktionsbauteil verbundenen Verriegelungsaktuator zu verstellen, wie dies bereits aus der DE 10 2015 213 005 A1 bekannt ist. Dadurch wird beispielsweise kein Elektromotor mehr als Aktuatorantrieb benötigt und es können aufwendige Kraft erhöhende Getriebe zwischen Elektromotor und Verriegelungsaktuator entfallen, wie beispielsweise Spindeltriebe und dergleichen. Somit reicht es wegen des geringeren erforderlichen Kraftaufwands aufgrund der gesonderten Bereitstellung der Dichtungsfunktion durch das gesondert vom Verriegelungsbauteil ausgebildete Dichtungsbauteil aus, das Reaktionsbauteil durch Ein- und Ausschalten der Magnetfeldquelle oder durch Umpolen desselben zu bewegen, je nachdem ob das Reaktionsbauteil weichmagnetisch oder permanentmagnetisch ist. Der Aktuatorantrieb, der bisher aufgrund seines Bauraums das größte Hindernis einer Rastermaßverringerung darstellte, kann somit auf kleinerem Bauraum realisiert werden, ohne dass damit ein Funktionsverlust der Pipettiervorrichtung einhergeht. Somit kann die Pipettiervorrichtung mit einer Pipettierkanal-Baugruppe, umfassend die Kanalbauteilanordnung mit dem darin ausgebildeten Pipettierkanal, der daran ausgebildeten Kopplungsausbildung samt Verriegelungsbauteil und Verriegelungsaktuator sowie weiter umfassend den Aktuatorantrieb, ausgebildet werden, die auch die Realisierung kleiner Rastermaße von weniger als 10 mm gestattet, ohne dass wie in der EP 2 755 033 A2 mehrere mit Abstand voneinander vorgesehene Führungsschienen oder wie in der EP 2 410 342 A2 an ein und derselben Führungsschiene unterschiedlich ausgebildete Pipettierkanal-Baugruppen erforderlich wären.

Mit der erfindungsgemäßen Lösung ist es möglich, den Aktuatorantrieb in einer zum Bewegungsweg des Reaktionsbauteils orthogonalen Raumrichtung auf eine Abmessung von nicht mehr als 9 mm zu begrenzen. Somit ist es möglich, die Pipettiervorrichtung mit einer Mehrzahl von orthogonal zur Kanalachse unmittelbar aufeinander folgenden gleichartigen Pipettierkanal-Baugruppen von jeweils nicht mehr als 9 mm Breite bereitzustellen, sodass ein bevorzugtes Rastermaß von 9 mm Breite durch eine Pipettiervorrichtung mit einer Mehrzahl von gleichartigen orthogonal zur Kanalachse unmittelbar aufeinanderfolgenden Pipettierkanal-Baugruppen eingehalten werden kann. Diese gleichartigen Pipettierkanal-Baugruppen müssen nicht mehr zwischen zwei parallelen Linear-Führungsanordnungen, wie Führungsschienen, an geordnet sein, sondern können derart an einer Linear-Führungsanordnung angeordnet sein, dass sie alle in derselben zur Längsrichtung der Linear-Führungsanordnung orthogonalen Richtung von der Linear-Führungsanordnung abstehen. Dadurch kann die Pipettiervorrichtung bei vorgegebener Anzahl an gleichartigen orthogonal zur Kanalachse unmittelbar benachbarten Pipettierkanal-Baugruppen kleiner bauen als nach dem System der EP 2 755 033 A2. Dies gilt auch und insbesondere dann, wenn die Linear-Führungsanordnung dennoch eine Mehrzahl von parallelen Führungsschienen umfasst, um beispielsweise einen linearmotorischen Bewegungsantrieb der einzelnen Pipettierkanal-Baugruppen zu ermöglichen. Es reicht daher aus, eine einzige Art von Pipettierkanal-Baugruppe zu fertigen, die allesamt identisch an einer Linear-Führungsanordnung montiert werden können, was nicht nur die Fertigung, sondern auch die Montage der Pipettiervorrichtung erleichtert.

Zwar kann grundsätzlich daran gedacht sein, dass die schaltbare Magnetfeldquelle eine ortsveränderliche Permanentmagnetanordnung mit wenigstens einem Permanentmagneten aufweist, welcher beispielsweise durch eine schlanke Kolben-Zylinder-Anordnung, zwischen einer Aktivstellung, in welcher er eine erste Bewegung des Reaktionsbauteils bewirkt, und einer Passivstellung, in welcher er keine oder eine der ersten entgegengesetzte zweite Bewegung des Reaktionsbauteils bewirkt, bewegt werden kann.

Da jedoch der Aktuatorantrieb in der Regel mit ausreichend großer Entfernung vom Pipettierkanal und somit von einer zu pipettierenden Flüssigkeit an einer Pipettierkanal-Baugruppe angeordnet werden kann, sodass eine gewisse Erwärmung des Aktuatorantrieb die zu pipettierende Flüssigkeit nicht beeinflussen kann, ist die schaltbare Magnetfeldquelle bevorzugt eine elektromagnetische Magnetfeldquelle. Daher weist die schaltbare Magnetfeldquelle gemäß einer bevorzugten Weiterbildung der vorliegenden Erfindung eine Spule aus elektrisch leitendem Material auf.

Grundsätzlich kann die Spule aus elektrisch leitendem Material einen Kern aufweisen, insbesondere einen ferromagnetischen Kern, welcher abhängig vom Bestromungszustand der Spule das Reaktionsbauteil anzieht oder nicht bzw. anzieht oder abstößt. Denn das Reaktionsbauteil kann, wie oben bereits dargelegt, weichmagnetisch sein, also ferromagnetisch, aber unmagnetisiert, oder kann permanentmagnetisch sein, also ferromagnetisch und dauermagnetisiert. Aus Gründen eines möglichst einfachen Aufbaus des Aktuatorantriebs ist jedoch bevorzugt vorgesehen, dass das Reaktionsbauteil in den von der Spule umgebenen Spulenraum hinein und aus diesem heraus beweglich ist. Das Reaktionsbauteil kann somit bevorzugt einen beweglichen Anker bilden, welcher abhängig vom Bestromungszustand der Spule unterschiedlich tief in den von der Spule umgebenen Spulenraum einragt. In einem besonders einfachen und bevorzugten Fall kann das Reaktionsbauteil das einzige bewegliche Bauteil des Aktuatorantriebs sein.

Grundsätzlich ist denkbar, dass der Verriegelungsaktuator durch den Aktuatorantrieb bidirektional zur Verstellung antreibbar ist. Vorteilhaft ist jedoch, wenn der Verriegelungsaktuator durch den Aktuatorantrieb nur in eine Verstellrichtung verstellbar ist, während er in die entgegengesetzte Verstellrichtung vorbelastet ist, beispielsweise durch Schwerkraft oder eine entsprechende vorbelastende Vorrichtung. Gemäß einer bevorzugten Weiterbildung der vorliegenden Erfindung ist der Verriegelungsaktuator durch den Aktuatorantrieb nur von der Eingriffsstellung in die Freigabestellung verstellbar. Dadurch wird der Aktuatorantrieb nur für einen Löseimpuls benötigt, wenn die lösbar angekoppelte Pipettierspitze von der Kopplungsausbildung getrennt werden soll. Dies senkt die Anforderungen an die vom Aktuatorantrieb zu liefernde Kraft und deren Lieferdauer und damit den vom Aktuatorantrieb eingenommenen Bauraum weiter.

Um eine definierte Kraft bereitstellen zu können, welche der Verriegelungsaktuator in der Eingriffsstellung auf das Verriegelungsbauteil ausübt, ist bevorzugt vorgesehen, dass der Verriegelungsaktuator durch ein Aktuator-Vorspannmittel in die Eingriffsstellung vorgespannt ist. Es kann dann ausreichen, wenn der Aktuatorantrieb lediglich stark genug ist, kurzzeitig die Vorspannkraft des Aktuator-Vorspannmittels zu überwinden. Der Aktuatorantrieb muss jedoch dann, wenn sich der Verriegelungsaktuator in der Eingriffsstellung befindet, keine Kraft auf den Verriegelungsaktuator oder mittelbar über den Verriegelungsaktuator auf das Verriegelungsbauteil ausüben.

Diese Kraft wird von dem vorteilhafterweise gesondert vom Aktuatorantrieb ausgebildeten Aktuator-Vorspannmittel ausgeübt. Das Aktuator-Vorspannmittel kann beispielsweise eine Feder sein, insbesondere eine Schraubenfeder, welche raumsparend koaxial zur Kanalachse, den Pipettierkanal umgebend an der Kanalbauteilanordnung aufgenommen sein kann. Bevorzugt ist das Aktuator-Vorspannmittel eine Schraubendruckfeder, welche durch Dimensionierung oder/und Materialwahl in ihrer Federhärte nahezu beliebig einstellbar ist und an beiden Längsenden lediglich je eine Auflagerfläche als Federwiderlager benötigt.

Das Verriegelungsbauteil kann dergestalt sein, dass sich die Eingriffsflächenanordnung dann, wenn sich der Verriegelungsaktuator in der Freigabestellung befindet, in der Entriegelungsstellung befindet oder in einem frei beweglichen Zustand zwischen der Entriegelungsstellung und der Verriegelungsstellung befindet. Durch Verstellung des Verriegelungsaktuators in die Eingriffsstellung kann somit die Eingriffsflächenanordnung sicher in die Verriegelungsstellung bewegt und dort gegen eine Rückbewegung in die Entriegelungsstellung gesichert werden. Erfindungsgemäß ist die Eingriffsflächenanordnung gebildet durch Außenflächenabschnitte einer Mehrzahl von radial-beweglich an der Kanalbauteilanordnung vorgesehenen Wälzkörpern, insbesondere Kugeln, welche bevorzugt unverlierbar in einem Wälzkörperkäfig aufgenommen sind. Zur Vermeidung unnötig hoher Bauteilanzahlen kann der Wälzkörperkäfig einstückig mit einem die Eingriffsflächenanordnung und das Dichtungsbauteil tragenden Grundkörper der Kopplungsausbildung ausgebildet sein.

Das Verriegelungsbauteil kann jedoch auch dergestalt sein, dass die Eingriffsflächenanordnung in die Verriegelungsstellung vorgespannt ist und durch den Verriegelungsaktuator in dessen Eingriffsstellung lediglich gegen eine Rückbewegung entgegen der auf die Eingriffsflächenanordnung wirkende Vorspannkraft in der Verriegelungsstellung festgelegt ist. Ebenso kann die Eingriffsflächenanordnung in die Entriegelungsstellung vorgespannt sein und durch Verstellung des Verriegelungsaktuators in die Eingriffsstellung gegen die auf die Eingriffsflächenanordnung wirkende Vorspannkraft in die Verriegelungsstellung bewegt und dort gehalten werden. Beispielsweise kann die Eingriffsflächenanordnung durch Flächenabschnitte von Eingriffsformationen gebildet sein, welche federnd, beispielsweise durch Blattfedern, an einem Federträger angeordnet sind. Bevorzugt sind die Eingriffsformationen einstückig mit sie vorspannenden Federn, insbesondere Blattfedern, ausgebildet. Ebenso bevorzugt sind die Blattfedern einstückig mit dem oben genannten Federträger ausgebildet. Der Federträger kann der oben bezeichnete Grundkörper der Kopplungsausbildung sein. Ein Bauteil, umfassend die einstückig zusammenhängenden Abschnitte Federträger, Blattfedern und Eingriffsformationen kann beispielsweise durch Spritzgießen eines thermoplastischen Kunststoffs erzeugt werden.

Das Verriegelungsbauteil kann daher einstückig oder mehrstückig ausgebildet sein, wobei eine Ausbildung mit einer aus mehreren nicht zusammenhängenden Teilflächen gebildeten Eingriffsflächenanordnung bevorzugt ist, da eine solche Eingriffsflächenanordnung eine Verlagerung derselben zwischen der Verriegelungsstellung und der Entriegelungsstellung längs eines Umlaufs um die Kanalachse mit der geringsten Verlagerungskraft ermöglicht.

Der Verriegelungsaktuator kann an seinem dem Verriegelungsbauteil zugewandten Wirkende eine Verriegelungsformation aufweisen, welche die dem Verriegelungsaktuator zugewiesene Aufgabe unterstützt. Beispielsweise kann der Verriegelungsaktuator an seinem Wirkende eine um die Kanalachse umlaufende, sich in Richtung von dem Verriegelungsbauteil weg in radialer Richtung vergrößernde Keilformation aufweisen mit einer nach radial außen weisenden und zur Kanalachse nicht-parallelen Außenfläche, insbesondere Konusfläche, welche während der Verstellung des Verriegelungsaktuators in die Eingriffsstellung in Eingriff mit einem Abschnitt des Verriegelungsbauteils gelangt und in der Eingriffsstellung eine körperliche Barriere gegen eine Verlagerung der Eingriffsflächenanordnung in die Entriegelungsstellung bildet.

Aufgrund der Verwendung eines gesondert vom Verriegelungsbauteil ausgebildeten Dichtungsbauteils kann die zur Herstellung der Abdichtung einer Pipettierspitze mit der Kopplungsausbildung der Pipettiervorrichtung gegenüber der Außenumgebung erforderliche Kraft zur Verformung des Dichtungsbauteils durch die Kopplungsbewegung der Kopplungsausbildung relativ zur Kopplungsformation der Pipettierspitze ausgeübt werden.

Bevorzugt umgibt die Kopplungsformation der Pipettierspitze im angekoppelten Zustand derselben einen Abschnitt der Kopplungsausbildung radial außen. In diesem von der Kopplungsformation der Pipettierspitze umgebenen Axialabschnitt der Kopplungsausbildung sind sowohl das Dichtungsbauteil als auch das Verriegelungsbauteil angeordnet, um einen Eingriff dieser beiden Bauteile mit der Kopplungsformation gewährleisten zu können.

Das Dichtungsbauteil ist bevorzugt ein elastomerer O-Dichtungsring, welcher beim Einführen der Kopplungsausbildung in die Kopplungsformation der Pipettierspitze radial verformt wird und dadurch in dichtende Anlage mit einer an der Kopplungsformation vorgesehenen Anlagefläche der Pipettierspitze gelangt. Bevorzugt ist das Dichtungsbauteil näher am freien, die Mündung des Pipettierkanals aufweisenden Längsende der Kopplungsformation angeordnet als das Verriegelungsbauteil, sodass das Dichtungsbauteil das Verriegelungsbauteil vor dem Einfluss von Flüssigkeit schützen kann, welche in eine vorübergehend angekoppelte Pipettierspitze aspiriert sein kann.

Aufgrund von Reibung zwischen der Kopplungsformation einer Pipettierspitze und der Kopplungsausbildung, insbesondere zwischen dem Dichtungsbauteil und der Kopplungsformation, kann eine zunächst an der Kopplungsausbildung verriegelt angekoppelte Pipettierspitze auch dann an der Kopplungsausbildung verbleiben, wenn die Eingriffsflächenanordnung in ihre Entriegelungsstellung verstellt oder verstellbar ist. Zwar kann daran gedacht sein, die Pipettierspitze dann, wenn die Eingriffsflächenanordnung nicht mehr durch den Verriegelungsaktuator in ihrer Verriegelungsstellung gehalten ist, durch Verfahren des Pipettierkanals in einer Richtung orthogonal zur Kanalachse an einer im Arbeitsbereich der Pipettiervorrichtung vorgesehenen Abstreifvorrichtung abzustreifen, jedoch würde dies aufeinander folgende Pipettiervorgänge an ein und demselben Pipettierkanal erheblich verzögern. Bevorzugt ist daher vorgesehen, dass die Pipettiervorrichtung eine Abstreiferanordnung aufweist, welche längs der Kanalachse verschiebbar ist zwischen einer Abstreifstellung, in welcher die Abstreiferanordnung näher beim Kopplungslängsende gelegen ist, und einer Bereitschaftsstellung, in welcher die Abstreiferanordnung weiter vom Kopplungslängsende entfernt gelegen ist. Bevorzugt umgibt die Abstreiferanordnung die Kanalachse und besonders bevorzugt umgibt die Abstreiferanordnung sowohl die Kanalachse als auch den Verriegelungsaktuator als auch, sofern vorhanden, das Aktuator-Vorspannmittel als auch, sofern vorhanden, ein Abstreifer-Vorspannmittel.

Eine besonders einfache, aber wirksame Abstreiferanordnung kann dadurch erhalten werden, dass die Abstreiferanordnung durch ein Abstreifer-Vorspannmittel in die Abstreifstellung vorgespannt ist. Wiederum ist das Abstreifer-Vorspannmittel bevorzugt eine Feder, insbesondere eine Schraubenfeder, besonders bevorzugt eine Schraubendruckfeder. Das als Schraubenfeder ausgebildete Abstreifer-Vorspannmittel ist vorzugsweise koaxial mit der Kanalachse den Pipettierkanal umgebend an der Kanalbauteilanordnung vorgesehen. Die Abstreiferanordnung, die die Kanalbauteilanordnung mit dem Pipettierkanal umgebend an der Pipettiervorrichtung vorgesehen ist, ist Teil der oben genannten Pipettierkanal-Baugruppe.

Die Abstreiferanordnung kann in vorteilhafter Weise ohne eigenen Verschiebeantrieb an der Pipettiervorrichtung auskommen, wenn eine an der Kopplungsausbildung anzukoppelnde Pipettierspitze während der von der Pipettiervorrichtung ausgeführten Kopplungsbewegung, durch welche die Kopplungsausbildung in die Kopplungsformation der Pipettierspitze eingeführt wird, für eine Verschiebung der Abstreiferanordnung von der Abstreifstellung entgegen der Vorspannkraft des Abstreifer-Vorspannmittels in die Bereitschaftsstellung sorgt. Somit wird die Relativbewegung zwischen Kopplungsausbildung und Pipettierspitze bei der Ankopplung der Pipettierspitze dazu genutzt, die Abstreiferanordnung in die Bereitschaftsstellung zu verschieben. In dieser kann sie während der Dauer der Ankopplung der Pipettierspitze an dem Pipettierkanal durch die Pipettierspitze gehalten sein. Dies kann konstruktiv an der Pipettiervorrichtung dadurch bewirkt sein, dass sich der Verriegelungsaktuator dann, wenn sich die Eingriffsflächenanordnung des Verriegelungsbauteils in der Verriegelungsstellung befindet und dadurch die Pipettierspitze an der Kopplungsausbildung hält, in der Eingriffsstellung befindet und so eine Verlagerung der Eingriffsflächenanordnung von der Verriegelungsstellung in die Entriegelungsstellung verhindert und dabei die Pipettierspitze gegen die Vorspannkraft des Abstreifer-Vorspannmittels die Abstreiferanordnung in der Bereitschaftsstellung hält. Bevorzugt überragt daher wenigstens ein der Kopplungsausbildung zugewandter axialer Endabschnitt der Abstreiferanordnung die Kopplungsausbildung radial außen, sodass dieser axiale Endabschnitt in Anlageeingriff mit einem Abschnitt der Kopplungsformation der Pipettierspitze, etwa mit einer Stirnseite desselben, gelangen und, getrieben durch das Abstreifer-Vorspannmittel, die Pipettierspitze von der Kopplungsausbildung abstreifen kann sobald der Verriegelungsaktuator sich in der Freigabestellung befindet und somit eine Bewegung der Eingriffsflächenanordnung in die Entriegelungsstellung nicht mehr behindert ist.

Für eine besonders schlanke Pipettierkanal-Baugruppe ist bevorzugt vorgesehen, dass die Kanalbauteilanordnung, der Verriegelungsaktuator und die Abstreiferanordnung koaxial angeordnet sind und in einer zur Kanalachse orthogonalen Richtung eine Abmessung von 9 mm nicht überschreiten. Wiederum ermöglicht dies die Bereitstellung einer bevorzugten Pipettiervorrichtung mit einer Mehrzahl von in Richtung orthogonal zur Kanalachse unmittelbar aufeinanderfolgenden gleichartigen Pipettierkanal-Baugruppen, vorzugsweise mit ausschließlich gleichartigen Pipettierkanal-Baugruppen, welche alle an einer Führungsschienenanordnung zur Bewegung orthogonal zur Kanalachse geführt sind, wobei alle Pipettierkanal-Baugruppen relativ zu dieser Führungsschienenanordnung zur selben Seite von dieser auskragen.

Die vorliegende Erfindung wird nachfolgend anhand der beiliegenden Zeichnungen näher dargestellt. Es stellt dar:
- Figur 1: eine schematische perspektivische Ansicht einer Pipettierkanal-Baugruppe (Pipettierkopf) einer erfindungsgemäßen Ausführungsform einer Pipettiervorrichtung,
- Figur 2: eine Längsschnitt-Teilansicht durch relevante Bauteile der PipettierkanalBaugruppe von Figur 1 mit angekoppelter Pipettierspitze und mit dem Verriegelungsaktuator in der Eingriffsstellung,
- Figur 3: die Ansicht von Figur 2 mit dem Verriegelungsaktuator in der Freigabestellung, zu Beginn eines Abstreifvorgangs zum Abstreifen der Pipettierspitze von der Kopplungsausbildung und
- Figur 4: die Längsschnitt-Teildarstellung der Figuren 2 und 3 mit abgestreifter Pipettierspitze, bereit zur Ankopplung einer neuen Pipettierspitze.

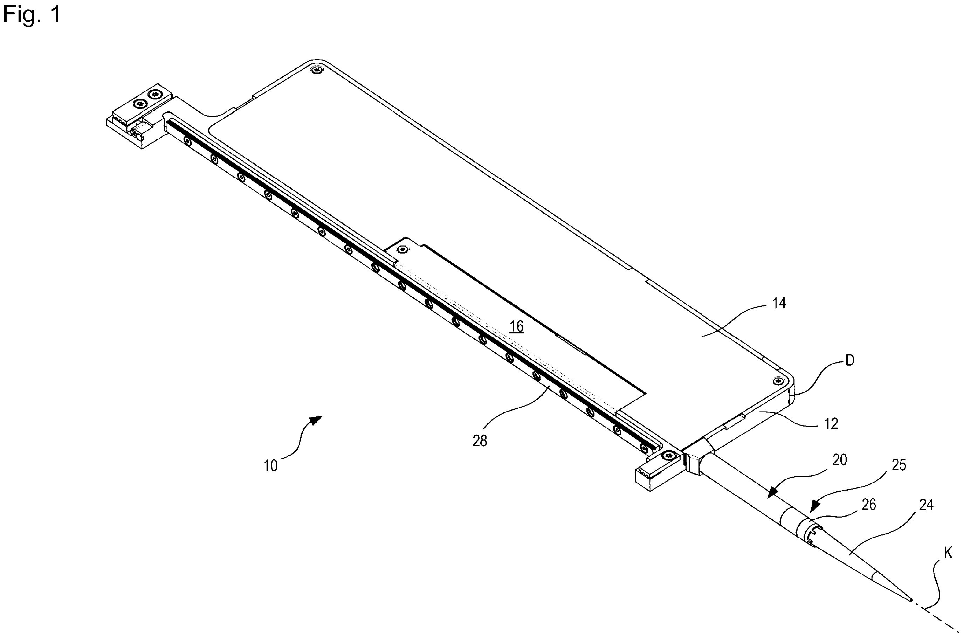

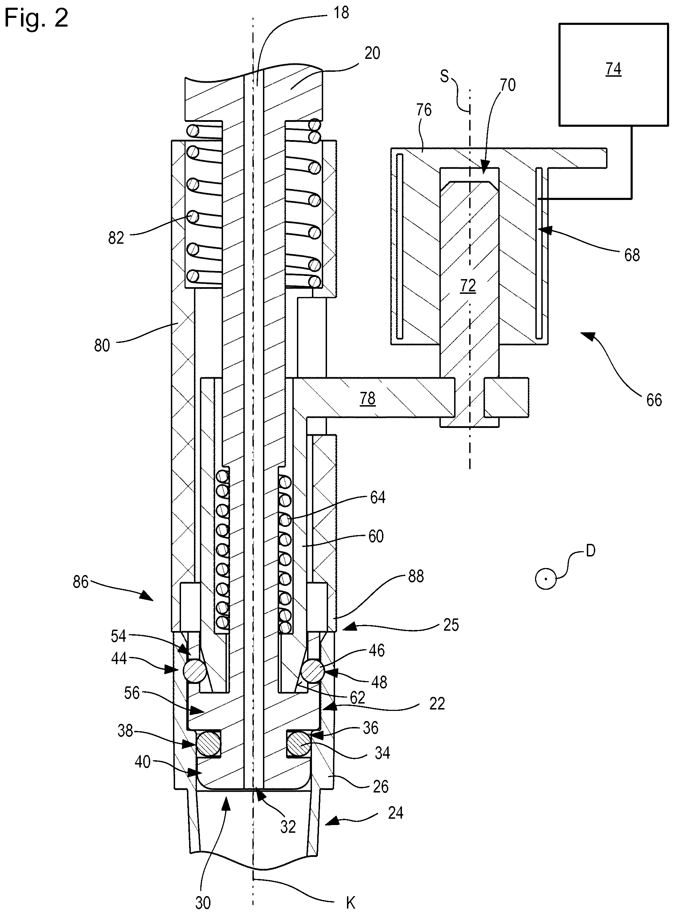

In Figur 1 ist eine Pipettierkanal-Baugruppe einer erfindungsgemäßen Pipettiervorrichtung allgemein mit 10 bezeichnet. In einem besonders einfachen Fall bildet die Pipettierkanal-Baugruppe 10 selbst die Pipettiervorrichtung. Die Pipettierkanal-Baugruppe 10 weist einen Rahmen 12 auf, welcher durch einen Deckel 14 bedeckt ist. Der Deckel 14 weist einen Zusatzdeckel 16 auf, durch welchen hindurch eine in den Figuren 1 bis 4 nicht dargestellte Kolben-Zylinder-Anordnung zugänglich ist, welche der Veränderung eines Arbeitsgas-Drucks in einem sich längs einer Kanalachse K erstreckenden Pipettierkanal 18 dient (s. Figuren 2 bis 4). Der Pipettierkanal 18 erstreckt sich innerhalb einer Kanalbauteilanordnung 20, welche eine Kopplungsausbildung 22 aufweist, an die in den Figuren 1 bis 3 eine Pipettierspitze 24 lösbar angekoppelt dargestellt ist.

Die Pipettierspitze 24 weist hierzu an ihrem kopplungsseitigen Längsende 25 eine Kopplungsformation 26 auf, welche im an die Kopplungsausbildung 22 angekoppelten Zustand die Kopplungsausbildung 22 bezüglich der Kanalachse K radial außen umgibt.

Ganz allgemein definiert die Kanalachse K eine axiale Richtung, welche ihre Erstreckungsrichtung ist, und definiert radiale Richtungen, welche zur axialen Richtung der Kanalachse K orthogonal orientiert sind.

Die Pipettierkanal-Baugruppe 10 von Figur 1 weist außerdem eine parallel zur Kanalachse K verlaufende Führungsschiene 28 auf, welche eine Lageveränderung der Pipettierkanal-Baugruppe 10 längs einer parallel zur Kanalachse K orientierten Z-Achse der Pipettiervorrichtung ermöglicht.

Die Pipettierkanal-Baugruppe 10 von Figur 1 ist üblicherweise mit der Führungsschiene 28 an einem Bewegungsrahmen (nicht dargestellt) parallel zur Kanalachse K zustellbar angeordnet, wobei der Bewegungsrahmen selbst wiederum längs einer zur Kanalachse K orthogonalen und zur Dickenrichtung D des Rahmens 12 parallelen X-Achse der Pipettiervorrichtung beweglich aufgenommen ist.

Die Pipettierkanal-Baugruppe 10 ist im dargestellten Beispiel von Figur 1 an keiner Stelle dicker als 9 mm, sodass gleichartige Pipettierkanal-Baugruppen 10 längs der zuletzt beschriebenen X-Achse auf ein Rastermaß von 9 mm einander angenähert werden können. Somit kann eine Pipettiervorrichtung mit identischen Pipettierkanal-Baugruppen 10 ausgerüstet werden, die alle zur selben Seite von der sie in Richtung der beschriebenen X-Achse führenden Führungsschienenanordnung abstehen. Dadurch wird eine sowohl einfach herzustellende und zu montierende als auch einen lediglich geringen Bauraum beanspruchende Pipettiervorrichtung erhalten. Der Grund für diese dünne Ausbildung der Pipettierkanal-Baugruppe 10 wird nachfolgend anhand der Figuren 2 bis 4 erläutert.

Der Pipettierkanal 18 mündet an einem kopplungsseitigen Längsende (Kopplungslängsende) 30 der Kanalbauteilanordnung 20 in einer, vorzugsweise zentralen, Mündung 32. An diesem das Kopplungslängsende 30 aufweisenden Endbereich der Kanalbauteilanordnung 20 ist die Kopplungsausbildung 22 ausgebildet.

Die Kopplungsausbildung 22 umfasst ein näher bei der Mündung 32 des Pipettierkanals gelegenes Dichtungsbauteil 34, welches im dargestellten Beispiel als durchgehend um die Pipettierkanalachse K umlaufender elastomerer O-Dichtungsring ausgebildet ist.

Das Dichtungsbauteil 34 ist in einer umlaufenden Nut 36 der Kopplungsausbildung 22 aufgenommen und ragt mit seiner radial äußeren Dichtungsfläche 38 radial über den zwischen dem Dichtungsbauteil 34 und dem Kopplungslängsende 30 gelegenen Abschnitt 40 der Kopplungsausbildung 22 radial vor, um sicher an eine Innenwandung 42 in der Kopplungsformation 26 der Pipettierspitze 24 dichtend in Anlageeingriff gelangen zu können.

Mit axialem Abstand in Richtung vom kopplungsseitigen Längsende 30 weg ist an der Kopplungsausbildung 22 ein mehrteiliges Verriegelungsbauteil 44 angeordnet, dessen mehrere Teile Kugeln 46 umfassen.

In Figur 2 ist erkennbar, dass eine radial nach außen weisende Eingriffsflächenanordnung 48 des Verriegelungsbauteils 44 in der in Figur 2 gezeigten Verriegelungsstellung der Eingriffsflächenanordnung 48 in eine Nut 50 in einer Innenwandung 52 in der Kopplungsformation 26 der Pipettierspitze 24 eingreift. Die Eingriffsflächenanordnung 48 ist im dargestellten Beispiel gebildet durch die Summe der einzelnen radial nach außen von der Kanalachse K weg weisenden Oberflächenabschnitte der Kugeln 46.

Die Kugeln 46 des Verriegelungsbauteils 44 sind in einem Kugelkäfig 54 unverlierbar an der Kopplungsausbildung 22 gehalten. Der Kugelkäfig 54 ist bevorzugt einstückig mit der die Kopplungsausbildung 22 aufweisenden Kanalbauteilanordnung 20 ausgebildet. Die Kanalbauteilanordnung 20 dient dabei als ein Grundkörper der Kopplungsausbildung 22, welcher das Dichtungsbaueil 34 und weitere gesondert ausgebildete Bauteile der Kopplungsausbildung 22 trägt.

Der Kugelkäfig 54 ist Teil eines im Wesentlichen zylindrischen oder leicht konischen Abschnitts 56 der Kopplungsausbildung 22 bzw. der Kanalbaugruppe 20, welcher an das Dichtungsbauteil 34 auf dessen von dem kopplungsseitigen Längsende 30 abgewandter Seite anschließt. Der Abschnitt 56 der Kopplungsausbildung 22 weist einen größeren Durchmesser auf als der Abschnitt 40, sodass die Abschnitte 56 und 40 gemeinsam einen Radialvorsprung als mechanische Anlage für einen Radialabsatz 58 in der Kopplungsformation 26 der Pipettierspitze 24 bilden können, um die axiale Lage der Pipettierspitze 24 im angekoppelten Zustand relativ zur Kopplungsausbildung 22 eindeutig festlegen zu können. Zur Ankopplung einer Pipettierspitze 24 an den Pipettierkanal 18 wird daher die Kopplungsausbildung 22 so lange axial in die Kopplungsformation 26 der Pipettierspitze 24 eingefahren, bis das in Einfahrrichtung vorauseilende Längsende des durchmessergrößeren Abschnitts 56 der Kopplungsausbildung 22 an dem Radialabsatz 58 in der Kopplungsformation 26 der Pipettierspitze 24 anliegt. Dann liegt auch die Nut 50 dem Verriegelungsbauteil 44 radial gegenüber, sodass dieses nach Verstellung der Eingriffsflächenanordnung 48 in die Verriegelungsstellung (siehe Figur 2) in die Nut 50 körperlich eingreifen kann.

Die Pipettiervorrichtung weist einen Verriegelungsaktuator 60 auf, welcher die Kanalachse K und den Pipettierkanal 18 umgebend vorgesehen ist.

Der Verriegelungsaktuator 60, welcher in Figur 2 in seiner Eingriffsstellung dargestellt ist, in der eine sich zum kopplungsseitigen Längsende 30 hin verjüngende Ringkeilfläche, bevorzugt Konusfläche, 62 an dem dem Verriegelungsbauteil 44 näher gelegenen Längsende des Verriegelungsaktuators 60 in Anlageeingriff mit den Kugeln 46 des Verriegelungsbauteils 44 ist, dient in vorliegendem Ausführungsbeispiel dazu, die Eingriffsflächenanordnung 48 der Kugeln 46 des Verriegelungsbauteils 44 sicher in die in Figur 2 gezeigte Verriegelungsstellung zu verlagern und dort gegen eine Rückverlagerung in eine radial weiter innen gelegene Entriegelungsstellung zu sichern. Durch den Anlageeingriff der Ringkeilfläche 62 mit dem Verriegelungsbauteil 44 in der in Figur 2 gezeigten Eingriffsstellung sind die Kugeln 46 des Verriegelungsbauteils 44 radial außen immobilisiert. Dadurch ist die Eingriffsflächenanordnung 48 in der Verriegelungsstellung gesichert, so dass die Pipettierspitze 24 durch Formschlusseingriff der Eingriffsflächenanordnung 48 mit der Nut 50 an der Kopplungsausbildung 22 sicher gehalten ist.

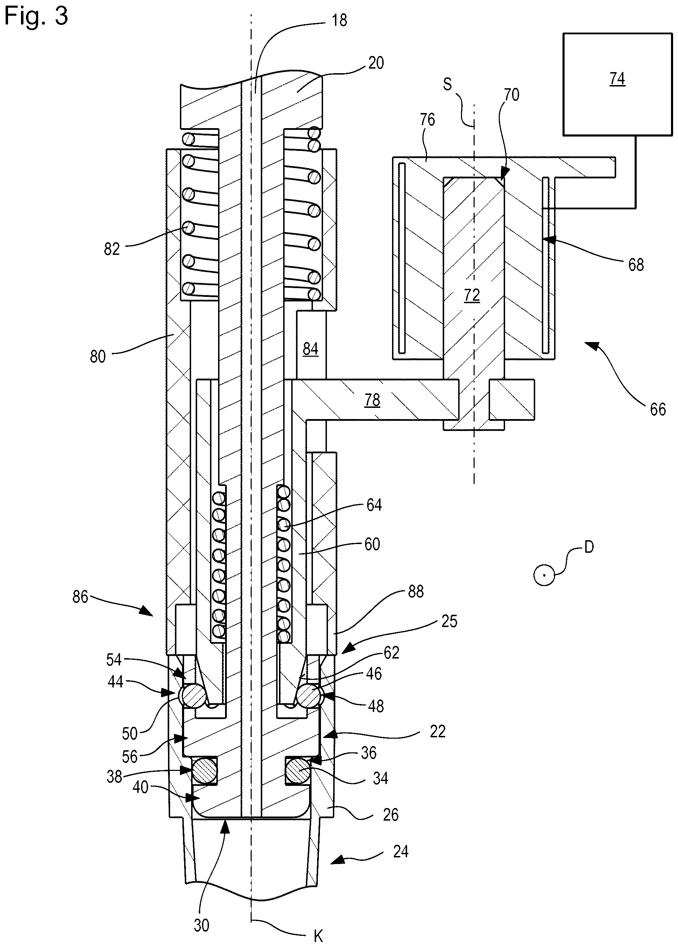

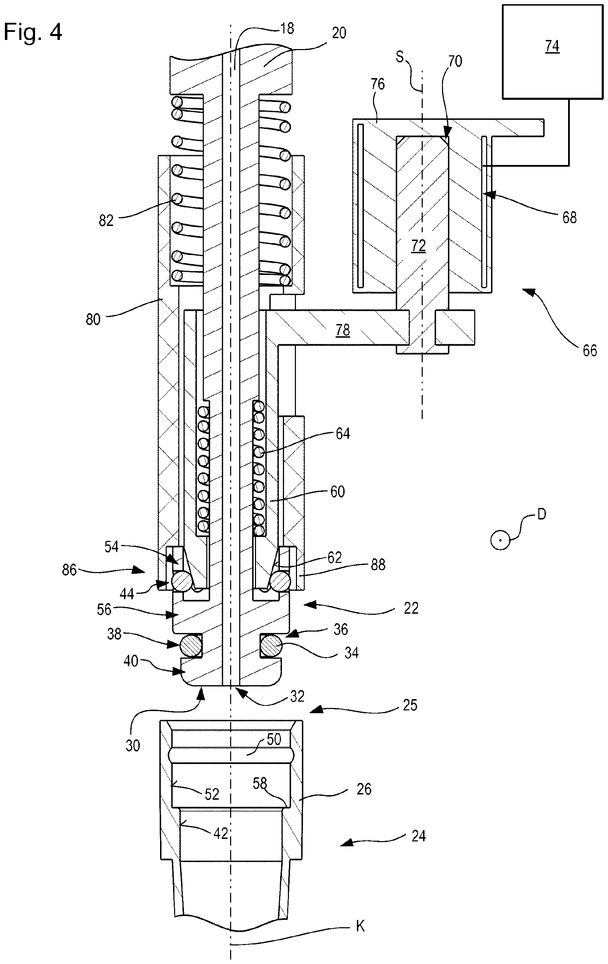

Der Verriegelungsaktuator 60 ist längs der Kanalachse K verstellbar zwischen der in Figur 2 gezeigten Eingriffsstellung und der in den Figuren 3 und 4 gezeigten Freigabestellung, wobei der Verriegelungsaktuator 60 durch ein Aktuator-Vorspannmittel 64 in bevorzugter Gestalt einer Schraubendruckfeder in die Eingriffsstellung vorgespannt ist. Das Aktuator-Vorspannmittel 64 umgibt den Pipettierkanal 18 und damit die Kanalachse K.

Im dargestellten Ausführungsbeispiel liegen die Kugeln 46 des Verriegelungsbauteils 44, dann, wenn sich der Verriegelungsaktuator 60 in der Freigabestellung befindet, lose in dem Kugelkäfig 54 und können sich in radialer Richtung frei bewegen.

Dann, wenn der Verriegelungsaktuator 60 sich in der in den Figuren 2 und 3 dargestellten Freigabestellung befindet, nehmen die Kugeln 46 des Verriegelungsbauteils 44 eine Zufallsposition ein, sind jedoch nahezu kraftfrei aus der radial äußeren Stellung, welche mit der Verriegelungsstellung der Eingriffsflächenanordnung 48 korrespondiert und in welcher die Eingriffsflächenanordnung 48 in die Nut 50 der Kopplungsformation 22 der Pipettierspitze 24 eingreift, nach radial innen in eine mit der Entriegelungsstellung der Eingriffsflächenanordnung 48 korrespondierende radial innere Stellung verlagerbar, in welcher die Eingriffsflächenanordnung 48 nicht mehr in die Nut 50 eingreift. Diese Verlagerung der Eingriffsflächenanordnung 48 von der Verriegelungsstellung in die Entriegelungsstellung kann beispielsweise durch Abstreifen der Pipettierspitze 24 von der Kopplungsausbildung 22 erfolgen.

Mit Verstellung des Verriegelungsaktuators 60 in die Eingriffsstellung werden die Kugeln 46 in die radial äußere Stellung und damit die von ihren radial außen liegenden Flächenabschnitten gebildete Eingriffsflächenanordnung 48 in die Verriegelungsstellung verlagert.

Da der Verriegelungsaktuator 60 durch das Aktuator-Vorspannmittel 64 in die Eingriffsstellung vorgespannt ist, reicht es für ein Ankoppeln einer Pipettierspitze 24 oder für ein Abstreifen derselben aus, den Verriegelungsaktuator 60 kurzzeitig in die Freigabestellung zu verlagern, um die Pipettierspitze 24 mit ihrer Kopplungsformation 26 mit möglichst wenig Kraftaufwand entweder auf die Kopplungsausbildung 22 axial aufschieben oder von dieser axial abstreifen zu können.

Für die Verstellung des Verriegelungsaktuators 60 in die Freigabestellung, wie sie in den Figuren 2 und 3 gezeigt ist, weist die Pipettiervorrichtung einen Aktuatorantrieb 66 auf. Dieser ist sehr einfach, aber wirkungsvoll aufgebaut und kann daher auf sehr kleinem Bauraum innerhalb der von der Pipettierkanal-Baugruppe 10 von Figur 1 bereitgestellten 9-mm-Dickenabmessung vorgesehen werden.

Der Aktuatorantrieb 66 weist eine relativ zur Kanalbauteilanordnung 20 - und damit auch zum Rahmen 12 der Pipettierkanal-Baugruppe 10 - ortsfeste Spule 68 aus einem elektrischen Leitermaterial auf. Die Spule 68 wiederum umgibt einen Spulenraum 70, in welchen ein Reaktionsbauteil 72 eingeführt ist. Das Reaktionsbauteil 72 ist im dargestellten Beispiel aus weichmagnetischem Material, beispielsweise aus Eisen.

Die Magnetspule 68 ist durch eine Steuereinrichtung 74, die auch den übrigen Betrieb der Pipettiervorrichtung steuern kann, wahlweise bestrombar. Somit dient sie als schaltbare Magnetfeldquelle.

Dann, wenn die Spule 68 bestromt ist, ist in ihrem Spulenraum 70 ein Magnetfeld ausgebildet, welches das Reaktionsbauteil 72 längs einer Spulenachse S bis zum Anschlag an einen Spulenträger 76 in den Spulenraum 70 einzieht.

Das Reaktionsbauteil 72 ist mit dem Verriegelungsaktuator 60 durch einen Steg 78 Bewegung übertragend verbunden. Wird das Reaktionsbauteil 72 durch Bestromung der Spule 68 vollständig in den Spulenraum 70 eingezogen, wird diese Bewegung über den Steg 78 auf den Verriegelungsaktuator 60 übertragen und der Verriegelungsaktuator 60 dadurch in die in den Figuren 3 und 4 gezeigte Freigabestellung verstellt bzw. angehoben.

Der Aktuatorantrieb 66 weist wenigstens in der zu den Zeichenebenen der Figuren 2 bis 4 orthogonalen Raumrichtung (Dickenrichtung D) eine Abmessung von nicht mehr als 9 mm auf, sodass auch der Aktuatorantrieb 66 innerhalb des bevorzugten Rastermaßes von 9 mm anordenbar ist, welches eine Dickenobergrenze für die Dicke bzw. Breite des Rahmens 12 bzw. der Pipettierkanal-Baugruppe 10 von Figur 1 ist.

Vorzugsweise ist der Aktuatorantrieb 66 zur Erleichterung seiner Montage in keiner zur Kanalachse K orthogonalen Raumrichtung größer als 9 mm.

Dieses geringe Bauvolumen ist dadurch möglich, dass durch die Magnetspule 68 lediglich die Kraft des Aktuator-Vorspannmittels 64 überwunden werden muss und dies auch nur kurzfristig.

Die Pipettiervorrichtung weist weiter eine Abstreiferanordnung 80 auf, durch welche die Pipettierspitze 24 axial von der Kopplungsausbildung 22 weg abstreifbar ist. Die Abstreiferanordnung 80 ist in den Figuren 2 und 3 in ihrer weiter vom Kopplungslängsende 30 entfernten Bereitschaftsstellung gezeigt und ist in Figur 4 in ihrer näher beim Kopplungslängsende 30 gelegenen Abstreifstellung gezeigt. Die Abstreiferanordnung 80 ist durch ein Abstreifer-Vorspannmittel 82 in bevorzugter Gestalt einer Schraubendruckfeder in die in Figur 4 gezeigte Abstreifstellung vorgespannt.

Die Abstreiferanordnung 80 ist vorzugsweise rohrförmig ausgebildet und erstreckt sich koaxial zum Pipettierkanal 18, zu der Kanalbaugruppe 20, zum Verriegelungsaktuator 60, zum Aktuator-Vorspannmittel 64 und zum Abstreifer-Vorspannmittel 82 längs der Kanalachse K, wobei sie die genannten Bauteile bzw. Baugruppen jeweils umgibt. Eine Öffnung 84 in der Abstreiferanordnung 80 ermöglicht einen Durchtritt des Stegs 78 und somit die Übertragung einer Bewegung vom Reaktionsbauteil 72 auf den Verriegelungsaktuator 60.

An seinem der Kopplungsausbildung 22 bzw. dem Kopplungslängsende 30 näher gelegenen Längsende 86 weist die Abstreiferanordnung 80 eine Abstreiferformation 88 auf, welche radial über die Kopplungsausbildung 22, genauer über den durchmessergrößeren Abschnitt 56 derselben derart hinaus reicht, dass die Abstreiferformation 88 axial an einem Axialabschnitt der Kopplungausbildung 22 vorbei in die Abstreifstellung verlagerbar ist, wie in Figur 4 gezeigt ist. In der Abstreifstellung umgibt die Abstreiferformation 88 einen Axialabschnitt der Kopplungsausbildung 22 radial außen.

Die Abstreiferanordnung 80 weist somit außer dem Abstreifer-Vorspannmittel 82 keinen eigenen Antrieb auf. Dann, wenn eine Pipettierspitze 24 an die Kopplungsausbildung 22 angekoppelt wird, taucht die Kopplungsausbildung 22 in die Kopplungsformation 26 der Pipettierspitze 24 ein, wodurch das kopplungsseitige Längsende 25 der Kopplungsformation 26 bzw. der Pipettierspitze 24 in Anlage an die Abstreiferformation 88 gelangt. Durch den Eintauchvorgang der Kopplungsausbildung 22 in die Kopplungsformation 26 wird mittels des Antriebs der Kanalbauteilanordnung 20 in Richtung längs der Kanalachse K die Abstreiferanordnung 80 durch die Pipettierspitze 24 relativ zur Kanalbauteilanordnung 20 axial gegen die Vorspannkraft des Abstreifer-Vorspannmittels 82 in die in den Figuren 1 und 2 gezeigte Bereitschaftsstellung verschoben. Der Verriegelungsaktuator 60 befindet sich dabei in der Freigabestellung und wird dann, wenn die Pipettierspitze 24 ihre gewünschte axiale Relativstellung relativ zur Kopplungsausbildung 22 eingenommen hat, also dann, wenn das dem Kopplungslängssende 30 näher gelegene Längsende des durchmessergrößeren Abschnitts 56 der Kopplungsausbildung 22 an dem Radialabsatz 58 der Kopplungsformation 26 in axialer Anlage gelangt ist, in die Eingriffsstellung verstellt, sodass die Pipettierspitze 24 durch das Verriegelungsbauteil 44 im angekoppelten Zustand an der Kopplungsausbildung 22 gehalten wird. Das Verriegelungsbauteil 44 in der radial äußeren Stellung muss daher der Kraft des Abstreifer-Vorspannmittels 82 widerstehen. Wegen der zueinander orthogonalen Wirkungsrichtungen (radial für das Verriegelungsbauteil 44 bzw. der Eingriffsflächenanordnung 48 und axial für das Abstreifer-Vorspannmittel 82) ist dies jedoch kein Problem.

Sobald der Verriegelungsaktuator 60 durch den Aktuatorantrieb 66 in die Freigabestellung verlagert wird, verlagert die Abstreiferanordnung 80, getrieben durch das Abstreifer-Vorspannmittel 82, die Pipettierspitze 24 axial von der Kopplungsausbildung 22 weg und wirft diese ab. Der Beginn dieser Abwurfbewegung ist in Figur 2 dargestellt.

## Patentansprüche

1. Pipettiervorrichtung mit einem Pipettierkanal (18), welcher sich längs einer eine axiale Richtung und hierzu orthogonale radiale Richtungen definierende Kanalachse (K) erstreckt und welcher eine Kanalbauteilanordnung (20) durchsetzt, die an einem Kopplungslängsende (30) eine Kopplungsausbildung (22) zur lösbaren Ankopplung einer Pipettierspitze (24) aufweist, wobei die Kopplungsausbildung (22) ein Verriegelungsbauteil (44) mit einer bezüglich der Kanalachse (K) nach radial außen weisenden Eingriffsflächenanordnung (48) aufweist, welche zwischen einer radial weiter von der Kanalachse (K) entfernt liegenden Verriegelungsstellung und einer radial näher bei der Kanalachse (K) liegenden Entriegelungsstellung verlagerbar ist, wobei die Pipettiervorrichtung weiter einen Verriegelungsaktuator (60) aufweist, welcher längs der Kanalachse (K) verstellbar ist zwischen einer Eingriffsstellung, in der der Verriegelungsaktuator (60) derart mit dem Verriegelungsbauteil in Eingriff ist, dass er eine Verlagerung der Eingriffsflächenanordnung (48) von der Verriegelungsstellung in die Entriegelungsstellung verhindert, und einer Freigabestellung, in der der Verriegelungsaktuator (60) eine Einnahme der Entriegelungsstellung durch die Eingriffsflächenanordnung (48) gestattet, wobei die Pipettiervorrichtung weiter einen Aktuatorantrieb (66) aufweist, welcher mit dem Verriegelungsaktuator (60) in Bewegung übertragender Verbindung steht, um den Verriegelungsaktuator (60) wenigstens in einer Bewegungsrichtung zur Verstellung zwischen Eingriffsstellung und Freigabestellung anzutreiben, wobei der Aktuatorantrieb (66) eine schaltbare Magnetfeldquelle (68) und ein durch das lokal veränderliche Magnetfeld der schaltbaren Magnetfeldquelle bewegliches ferromagnetisches Reaktionsbauteil (72) aufweist, wobei das Reaktionsbauteil (72) Bewegung übertragend mit dem mit dem Verriegelungsaktuator (60) verbunden ist,
**dadurch gekennzeichnet, dass** die Kopplungsausbildung (22) in axialem Abstand zum Verriegelungsbauteil (44) ein gesondert vom Verriegelungsbauteil (44) ausgebildetes Dichtungsbauteil (34) aufweist, welches um den Pipettierkanal (18) umläuft, sowie dadurch, dass, die Eingriffsflächenanordnung (48) gebildet ist durch Außenflächenabschnitte einer Mehrzahl von radial-beweglich an der Kanalbauteilanordnung (20) vorgesehenen Wälzkörpern (46).

2. Pipettiervorrichtung nach Anspruch 1,
**dadurch gekennzeichnet, dass** der Aktuatorantrieb (66) in einer zum Bewegungsweg des Reaktionsbauteils (72) orthogonalen Raumrichtung eine Abmessung von nicht mehr als 9 mm aufweist.

3. Pipettiervorrichtung nach Anspruch 1 oder 2,
**dadurch gekennzeichnet, dass** die schaltbare Magnetfeldquelle (68) eine Spule (68) aus elektrisch leitendem Material aufweist,

4. Pipettiervorrichtung nach Anspruch 3,
**dadurch gekennzeichnet, dass** das Reaktionsbauteil (72) in den von der Spule (68) umgebenen Spulenraum (70) hinein und aus diesem heraus beweglich ist.

5. Pipettiervorrichtung nach einem der vorhergehenden Ansprüche,
**dadurch gekennzeichnet, dass** der Verriegelungsaktuator (60) durch den Aktuatorantrieb (66) nur von der Eingriffsstellung in die Freigabestellung verstellbar ist.

6. Pipettiervorrichtung nach Anspruch 5,
**dadurch gekennzeichnet, dass** der Verriegelungsaktuator (60) durch ein Aktuator-Vorspannmittel (64) in die Eingriffsstellung vorgespannt ist.

7. Pipettiervorrichtung nach einem der vorhergehenden Ansprüche,
**dadurch gekennzeichnet, dass** sie eine Abstreiferanordnung (80) aufweist, welche längs der Kanalachse (K) verschiebbar ist zwischen einer Abstreifstellung, in welcher die Abstreiferanordnung (80) näher beim Kopplungslängsende (30) gelegen ist, und einer Bereitschaftsstellung, in welcher die Abstreiferanordnung (80) weiter vom Kopplungslängsende (30) entfernt gelegen ist.

8. Pipettiervorrichtung nach Anspruch 7,
**dadurch gekennzeichnet, dass** die Abstreiferanordnung (80) durch ein Abstreifer-Vorspannmittel (82) in die Abstreifstellung vorgespannt ist.

9. Pipettiervorrichtung nach Anspruch 7 oder 8, mit einer an der Kopplungsausbildung angekoppelten Pipettierspitze (24),
**dadurch gekennzeichnet, dass** sich die Eingriffsflächenanordnung (48) des Verriegelungsbauteils (44) in der Verriegelungsstellung befindet und dadurch die Pipettierspitze (24) an der Kopplungsausbildung (22) hält, wobei sich der Verriegelungsaktuator (60) in der Eingriffsstellung befindet und so eine Verlagerung der Eingriffsflächenanordnung (48) von der Verriegelungsstellung in die Entriegelungsstellung verhindert und wobei die Pipettierspitze (24) gegen die Vorspannkraft des Abstreifer-Vorspannmittels (82) die Abstreiferanordnung (80) in der Bereitschaftsstellung hält.

10. Pipettiervorrichtung nach einem der Ansprüche 7 bis 9,
**dadurch gekennzeichnet, dass** die Kanalbauteilanordnung (20), der Verriegelungsaktuator (60) und die Abstreiferanordnung (80) koaxial angeordnet sind und in einer zur Kanalachse (K) orthogonalen Richtung eine Abmessung von 9 mm nicht überschreiten.

11. Pipettiervorrichtung nach einem der vorhergehenden Ansprüche,
**dadurch gekennzeichnet, dass** die Wälzkörper (46) Kugeln (46) sind.

12. Pipettiervorrichtung nach einem der vorhergehenden Ansprüche,
**dadurch gekennzeichnet, dass** die Wälzkörper (46) unverlierbar in einem Wälzkörperkäfig (54) aufgenommen sind.

13. Pipettiervorrichtung nach einem der vorhergehenden Ansprüche,
**dadurch gekennzeichnet, dass** der Wälzkörperkäfig (54) einstückig mit einem die Eingriffsflächenanordnung (48) und das Dichtungsbauteil (34) tragenden Grundkörper(20) der Kopplungsausbildung (22) ausgebildet ist.

14. Pipettiervorrichtung nach Anspruch 13,
**dadurch gekennzeichnet, dass** die Kanalbauteilanordnung (20) der Grundkörper (20) ist.

## Claims

1. A pipetting apparatus, having a pipetting conduit (18) that extends along a conduit axis (K) defining an axial direction and radial directions orthogonal thereto, and that passes through a conduit component arrangement (20) that comprises, at a coupling longitudinal end (30), a coupling configuration (22) for releasable attachment of a pipette tip (24), the coupling configuration (22) comprising a locking component (44) having an engagement surface arrangement (48) which faces radially outward with reference to the conduit axis (K) and is displaceable between a locked position located radially farther from the conduit axis and an unlocked position located radially closer to the conduit axis (K), the pipetting apparatus further comprising a locking actuator (60) that is shiftable along the conduit axis (K) between an engagement position in which the locking actuator (60) is in engagement with the locking component in such a way that it prevents a displacement of the engagement surface arrangement (48) from the locked position into the unlocked position and a release position in which the locking actuator (60) permits assumption of the unlocked position by the engagement surface arrangement (48), the pipetting apparatus further comprising an actuator drive system (66) that is motion-transferringly connected to the locking actuator (60) in order to drive the locking actuator (60) at least in a motion direction for shifting between an engagement position and a release position, wherein the actuator drive system (66) comprises a switchable magnetic-field source (68) and a ferromagnetic reaction component (72) movable by the locally modifiable magnetic field of the switchable magnetic-field source, the reaction component (72) being motion-transferringly connected to the locking actuator (60) **characterized in that** the coupling configuration (22) comprises, at an axial distance from the locking component (44), a sealing component (34) that is embodied separately from the locking component (44) and extends around the pipetting conduit (18), and **in that** the engagement surface arrangement (48) is constituted by external surface portions of a plurality of rolling elements (46) provided radially movably on the conduit component arrangement (20).

2. The pipetting apparatus according to Claim 1,
**characterized in that** the actuator drive system (66) has a dimension of no more than 9 mm in a spatial direction orthogonal to the motion path of the reaction component (72).

3. The pipetting apparatus according to Claim 1 or 2,
**characterized in that** the switchable magnetic-field source (68) comprises a coil (68) made of electrically conductive material.

4. The pipetting apparatus according to Claim 3,
**characterized in that** the reaction component (72) is movable into and out of the coil space (70) surrounded by the coil (68).

5. The pipetting apparatus according to one of the preceding claims,
**characterized in that** the locking actuator (60) is displaceable by the actuator drive system (66) only from the engagement position into the release position.

6. The pipetting apparatus according to Claim 5,
**characterized in that** the locking actuator (60) is preloaded into the engagement position by an actuator preloading means (64).

7. The pipetting apparatus according to one of the preceding claims,
**characterized in that** it comprises a stripper arrangement (80) that is shiftable along the conduit axis (K) between a stripping position in which the stripper arrangement (80) is located closer to the coupling longitudinal end (30) and a readiness position in which the stripper arrangement (80) is located farther from the coupling longitudinal end (30).

8. The pipetting apparatus according to Claim 7,
**characterized in that** the stripper arrangement (80) is preloaded into the stripping position by a stripper preloading means (82).

9. The pipetting apparatus according to Claim 7 or 8, having a pipette tip (24) attached to the coupling configuration,
**characterized in that** the engagement surface arrangement (48) of the locking component (44) is in the locked position and thereby retains the pipette tip (24) on the coupling configuration, the locking actuator (60) being in the engagement position and thus preventing a displacement of the engagement surface arrangement (48) from the locked position into the unlocked position, and the pipette tip (24) retaining the stripper arrangement (80) in the readiness position against the preload force of the stripper preloading means (82).

10. The pipetting apparatus according to one of Claims 7 to 9,
**characterized in that** the conduit component arrangement (20), the locking actuator (60), and the stripper arrangement (80) are arranged coaxially and do not exceed a dimension of 9 mm in a direction orthogonal to the conduit axis (K).

11. The pipetting apparatus according to one of the preceding claims,
**characterized in that** the rolling elements (46) are balls (46).

12. The pipetting apparatus according to one of the preceding claims,
**characterized in that** the rolling elements (46) are received in captive fashion in a rolling-element cage (54).

13. The pipetting apparatus according to one of the preceding claims,
**characterized in that** the rolling-element cage (54) is embodied in one piece with a base element (20) of the coupling configuration, carrying the engagement surface arrangement (48) and the sealing component (34).

14. The pipetting apparatus according to Claims 13,
**characterized in that** the conduit component arrangement (20) is the base element (20).

## Revendications

1. Dispositif de pipetage ayant un canal de pipetage (18) qui s'étend le long d'un axe de canal (K) définissant une direction axiale et des directions radiales orthogonales à celle-ci et qui passe à travers un ensemble de composants de canal (20), qui présente, à une extrémité longitudinale d'accouplement (30), une formation d'accouplement (22) pour l'accouplement amovible d'une pointe de pipetage (24), dans lequel la formation d'accouplement (22) présente un composant de verrouillage (44) avec un ensemble de surface d'engagement (48) orienté radialement vers l'extérieur par rapport à l'axe de canal (K), qui est déplaçable entre une position de verrouillage radialement plus éloignée de l'axe de canal (K) et une position de déverrouillage radialement plus proche de l'axe de canal (K), dans lequel le dispositif de pipetage comprend en outre un actionneur de verrouillage (60) qui est déplaçable le long de l'axe de canal (K) entre une position engagée dans laquelle l'actionneur de verrouillage (60) est engagé avec le composant de verrouillage de telle sorte qu'il empêche un déplacement de l'ensemble de surface d'engagement (48) de la position de verrouillage à la position de déverrouillage, et une position de libération dans laquelle l'actionneur de verrouillage (60) permet à l'ensemble de surface d'engagement (48) de prendre la position de déverrouillage, dans lequel le dispositif de pipetage comprend en outre un entraînement d'actionneur (66) en communication de transmission de mouvement avec l'actionneur de verrouillage (60), pour entraîner l'actionneur de verrouillage (60) au moins dans une direction de mouvement pour un déplacement entre la position engagée et la position de libération, dans lequel l'entraînement d'actionneur (66) comprend une source de champ magnétique commutable (68) et un élément de réaction ferromagnétique (72) déplaçable par le champ magnétique localement variable de la source de champ magnétique commutable, dans lequel l'élément de réaction (72) est connecté à l'actionneur de verrouillage (60) en relation de transmission de mouvement,
**caractérisé en ce que** la formation d'accouplement (22) comprend un composant d'étanchéité (34) espacé axialement du composant de verrouillage (44), et formé séparément du composant de verrouillage (44) et qui tourne autour du canal de pipetage (18), et **en ce que** l'ensemble de surface d'engagement (48) est formé par des parties de surface extérieure d'une pluralité d'éléments roulants (46) prévus de manière mobiles radialement sur l'ensemble de composants de canal (20).

2. Dispositif de pipetage selon la revendication 1,
**caractérisé en ce que** l'entraînement d'actionneur (66) a une dimension ne dépassant pas 9 mm dans une direction spatiale orthogonale à la trajectoire de mouvement du composant de réaction (72).

3. Dispositif de pipetage selon la revendication 1 ou 2,
**caractérisé en ce que** la source de champ magnétique commutable (68) comprend une bobine (68) en matériau électriquement conducteur.

4. Dispositif de pipetage selon la revendication 3,
**caractérisé en ce que** le composant de réaction (72) est mobile dans et hors de l'espace de bobine (70) entouré par la bobine (68).

5. Dispositif de pipetage selon l'une quelconque des revendications précédentes,
**caractérisé en ce que** l'actionneur de verrouillage (60) est déplaçable par l'entraînement d'actionneur (66) uniquement de la position engagée à la position de libération.

6. Dispositif de pipetage selon la revendication 5,
**caractérisé en ce que** l'actionneur de verrouillage (60) est sollicité dans la position engagée par un moyen de sollicitation d'actionneur (64).

7. Dispositif de pipetage selon l'une quelconque des revendications précédentes,
**caractérisé en ce qu'il** comprend un ensemble d'essuyage (80) déplaçable le long de l'axe de canal (K) entre une position d'essuyage, dans laquelle l'ensemble d'essuyage (80) est situé plus près de l'extrémité longitudinale d'accouplement (30), et une position d'attente, dans laquelle l'ensemble d'essuyage (80) est situé plus loin de l'extrémité longitudinale d'accouplement (30).

8. Dispositif de pipetage selon la revendication 7,
**caractérisé en ce que** l'ensemble d'essuyage (80) est sollicité dans la position d'essuyage par un moyen de sollicitation d'essuyage (82).

9. Dispositif de pipetage selon la revendication 7 ou 8, comprenant une pointe de pipetage (24) accouplée à la formation d'accouplement,
**caractérisé en ce que** l'ensemble de surface d'engagement (48) du composant de verrouillage (44) est dans la position de verrouillage et retient ainsi la pointe de pipetage (24) sur la formation d'accouplement (22), dans lequel l'actionneur de verrouillage (60) est dans la position engagée, empêchant ainsi le déplacement de l'ensemble de surface d'engagement (48) de la position de verrouillage à la position de déverrouillage, et dans lequel la pointe de pipetage (24) maintient l'ensemble d'essuyage (80) dans la position d'attente contre la force de sollicitation du moyen de sollicitation d'essuyage (82).

10. Dispositif de pipetage selon l'une quelconque des revendications 7 à 9,
**caractérisé en ce que** l'ensemble de composants de canal (20), l'actionneur de verrouillage (60) et l'ensemble d'essuyage (80) sont disposés coaxialement et ne dépassent pas une dimension de 9 mm dans une direction orthogonale à l'axe de canal (K).

11. Dispositif de pipetage selon l'une des revendications précédentes,
**caractérisé en ce que** les éléments roulants (46) sont des billes (46).

12. Dispositif de pipetage selon l'une des revendications précédentes,
**caractérisé en ce que** les éléments roulants (46) sont reçus de manière captive dans une cage à éléments roulants (54).

13. Dispositif de pipetage selon l'une des revendications précédentes,
**caractérisé en ce que** la cage d'éléments roulant (54) est formée en une pièce avec un corps de base (20) de la structure d'accouplement (22) portant l'ensemble de surface d'engagement (48) et le composant d'étanchéité (34).

14. Dispositif de pipetage selon la revendication 13,
**caractérisé en ce que** l'ensemble de composants de canal (20) forme le corps de base (20).
